(19) **Europäisches Patentamt**
**European Patent Office**
**Office européen des brevets**

(11) **EP 3 364 761 B1**

(12) **EUROPEAN PATENT SPECIFICATION**

(45) Date of publication and mention
of the grant of the patent:
**09.12.2020 Bulletin 2020/50**

(21) Application number: **16784161.8**

(22) Date of filing: **14.10.2016**

(51) Int Cl.:
*A01N 59/16* (2006.01)          *A01N 59/00* (2006.01)
*A01N 25/30* (2006.01)          *A01P 1/00* (2006.01)

(86) International application number:
**PCT/EP2016/074702**

(87) International publication number:
**WO 2017/067852 (27.04.2017 Gazette 2017/17)**

(54) **AN ANTIMICROBIAL COMPOSITION**

ANTIMIKROBIELLE ZUSAMMENSETZUNG

COMPOSITION ANTIMICROBIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2015 PCT/EP2015/190835**

(43) Date of publication of application:
**29.08.2018 Bulletin 2018/35**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London EC4Y 0DY (GB)**
Designated Contracting States:
**CY GB IE MT**

(72) Inventors:
• **NAYAK, Kalpana, Kamalakar**
**Bangalore 560 066 (IN)**
• **SAJI, Maya, Treesa**
**Bangalore 560 066 (IN)**

(74) Representative: **van den Brom, Coenraad Richard**
**Unilever N.V.**
**Unilever Patent Group**
**Bronland 14**
**6708 WH Wageningen (NL)**

(56) References cited:
**WO-A1-2014/170186     US-A1- 2011 224 120**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to an antimicrobial cleansing composition and a method of cleaning or disinfecting a surface. The invention more particularly relates to an antimicrobial cleansing composition that provides antimicrobial efficacy in cleaning applications having relatively short contact times.

### Background of the invention

Soap based cleansing composition provides antibacterial benefits largely associated with the removal of organisms from a surface through the cleansing/detergency action of such products. Such compositions commonly have biocidal action against many gram negative bacteria. The biocidal action of soap compositions against gram positive bacteria is considerably more limited within the contact times typical of product use, generally under 1 minute, and more commonly of the order of 30 seconds or less. Achieving biocidal action against gram positive bacteria is especially problematic in the case of high pH cleansing compositions.

Various routes to improving the biocidal activity of soap based cleansing compositions have been suggested.

US2008014247A (Lu et al., 2008) discloses a composition having metal containing material, stearic acid and a pharmaceutically acceptable carrier to treat conditions caused by gram-positive, gram-negative, fungal pathogens and/or antibiotic-resistant bacteria. It further provides a method for inhibiting biofilm proliferation. The metal containing material can be silver.

US6051614A discloses a method for preparing a non-aqueous dispersion of particles of a metal and/or a metal compound, which comprises contacting an aqueous dispersion of particles of a metal and/or a metal compound with a water-immiscible, non-aqueous liquid in the presence of a surfactant and in the presence or absence of a water-soluble inorganic acid salt and/or a water-soluble organic acid salt exhibiting substantially no surface activity, wherein when the contacting of the aqueous dispersion with the non-aqueous liquid is conducted in the absence of the salt, the salt is added after the contacting, thereby causing the particles to be migrated from the aqueous dispersion into the non-aqueous liquid.

US3050467 B1 (Horowitz et al. 1962) discloses an antimicrobial cleansing composition consisting essentially of a mixture of a water-soluble soap and a silver salt of partially depolymerized alginic acid. The composition provides synergestic antimicrobial activity.

US2011224120 AA (Henkel) discloses liquid washing compositions having surfactant, silver and/or a silver compound and a non-neutralized fatty acid.

WO 2014/170186 A1 discloses antimicrobial compositions comprising at least one silver(1) compound and a fatty acid soap. The addition of ammonium hydroxide is disclosed, but apparently to reach a clear formulation.

When silver compound is used in soap based cleaning compositions high levels of silver are required for providing antimicrobial benefits as suggested in prior art. Because of this high level of silver in the composition makes it relatively unstable, undergoes discoloration and is aesthetically unpleasant.

Prior disclosures have not addressed the issue of providing an antimicrobial cleansing composition with low amount of silver yet with effective antimicrobial activity in a short time frame.

Thus an object of the present invention is to provide an antimicrobial cleansing composition that provides biocidal activity in relatively short contact times of 1 minute to 30 seconds.

Another object of the present invention is to provide an antimicrobial cleansing composition which provides antimicrobial activity at very low concentration of silver compound.

A further object of the present invention is to provide an antimicrobial cleansing composition which has consumer-acceptable aesthetic properties.

A still further object of the present invention is to provide an antimicrobial composition that is highly efficacious against a broad spectrum of gram positive and gram negative bacteria.

We have found that antibacterial activity in relatively short contact times against gram positive and gram negative microorganisms in a soap based cleansing composition having silver compound enhances considerably in presence of an additional anionic surfactant with ammonium as counter ion. Furthermore it has been found that the antibacterial activity is enhanced even at very low concentrations of silver compound. Given the relatively high cost of silver, such low levels of silver compound provides for significant cost benefits also, compared to the higher levels of silver compounds required to provide significant biocidal effect within the contact times of interest. Additionally, the low levels of silver compound are desirable from both a sensory and process vantage.

**Summary of the invention**

In a first aspect of the present invention there is provided an antimicrobial composition comprising:

a) 0.1 to 100 ppm by weight of at least one silver compound;
b) a combination of anionic surfactants comprising 1 to 85% by weight of a salt of fatty acid and 0.1 to 20% by weight of an anionic surfactant with ammonium as counter ion wherein the hydrophilic part of the surfactant consists of a negatively charged sulphonate or sulphate group.

In a second aspect of the present invention there is provided a non-therapeutic method of cleaning or disinfecting a surface comprising the steps of applying a composition of the first aspect on to said surface and at least partially removing the composition from the surface.
Any feature of one aspect of the present invention may be utilized in any other aspect of the invention. The word "comprising" is intended to mean "including" but not necessarily "consisting of" or "composed of." In other words, the listed steps or options need not be exhaustive.

**Detailed description of the invention**

The present invention provides an antimicrobial composition comprising:

a) 0.1 to 100 ppm by weight of at least one silver compound;
b) a combination of anionic surfactants comprising 1 to 85% by weight of a salt of fatty acid and 0.1 to 20% by weight of an anionic surfactant with ammonium as counter ion wherein the hydrophilic part of the surfactant consists of a negatively charged sulphonate or sulphate group.

Antimicrobial composition as mentioned herein above preferably means any composition which is capable of killing or at least cause substantial reduction of the common disease causing microbes. The common disease causing gram-positive organisms includes *Staphylococcus, Streptococcus* and *Enterococcus* spp. Some of common disease causing gram-negative organisms includes *Escherichia coli, Salmonella, Klebsiella* and *Shigella. Escherichia coli* and *Salmonella* can cause severe gastrointestinal illnesses.

Silver compound:

The present invention employs at least one silver compound. The silver compound may preferably be selected from silver (I) compounds. The antimicrobial cleansing composition includes 0.1 to 100 ppm, preferably 0.5 to 50 ppm and most preferably 0.5 to 10 ppm silver compounds.
The silver compounds are preferably water-soluble wherein the silver ion solubility at least $1.0 \times 10^{-4}$ mol/L (in water at 25°C). Silver ion solubility, as referred to herein, is a value derived from a solubility product (Ksp) in water at 25°C, a well known parameter that is reported in numerous sources. More particularly, silver ion solubility [Ag+], a value given in mol/L may be calculated using the formula:

$$[Ag+] = (Ksp \bullet x)^{(1/(x+1))}$$

wherein Ksp is the solubility product of the compound of interest in water at 25°C, and x represents the number of moles of silver ion per mole of compound. It has been found that silver (I) compounds having a silver ion solubility of at least $1 \times 10^{-4}$ mol/L in are preferable for use herein. Silver ion solubility values for a variety of silver compounds are given in Table 1:

TABLE 1

| Silver Compound | X | Ksp (mol/L in water at 25 °C) | Silver Ion Solubility [Ag+] (mol/L in water at 25 °C). |
|---|---|---|---|
| Silver nitrate | 1 | 51.6 | 7.2 |
| Silver acetate | 1 | $2.0 \times 10^{-3}$ | $4.5 \times 10^{-2}$ |
| Silver sulfate | 2 | $1.4 \times 10^{-5}$ | $3.0 \times 10^{-2}$ |
| Silver benzoate | 1 | $2.5 \times 10^{-5}$ | $5.0 \times 10^{-3}$ |

(continued)

| Silver Compound | X | Ksp (mol/L in water at 25 °C) | Silver Ion Solubility [Ag+] (mol/L in water at 25 °C). |
|---|---|---|---|
| Silver salicylate | 1 | $1.5 \times 10^{-5}$ | $3.9 \times 10^{-3}$ |
| Silver carbonate | 2 | $8.5 \times 10^{-12}$ | $2.6 \times 10^{-4}$ |
| Silver citrate | 3 | $2.5 \times 10^{-16}$ | $1.7 \times 10^{-4}$ |
| Silver oxide | 1 | $2.1 \times 10^{-8}$ | $1.4 \times 10^{-4}$ |
| Silver phosphate | 3 | $8.9 \times 10^{-17}$ | $1.3 \times 10^{-4}$ |
| Silver chloride | 1 | $1.8 \times 10^{-10}$ | $1.3 \times 10^{-5}$ |
| Silver bromide | 1 | $5.3 \times 10^{-13}$ | $7.3 \times 10^{-7}$ |
| Silver iodide | 1 | $8.3 \times 10^{-17}$ | $9.1 \times 10^{-9}$ |
| Silver sulfide | 2 | $8.0 \times 10^{-51}$ | $2.5 \times 10^{-17}$ |

A preferred silver(I) compound is selected from silver oxide, silver nitrate, silver acetate, silver sulfate, silver benzoate, silver salicylate, silver carbonate, silver citrate and silver phosphate, more preferably the silver compound is silver oxide, silver sulfate or silver citrate and still further preferred silver(I) compound is silver oxide or silver sulphate.

The silver compound also may preferably be a complex of silver. The silver complex may be formed by reacting silver with one or more of a chelating agent. Chelates are characterized by coordinate covalent bonds. These occur when unbonded pairs of electrons on non- metal atoms like nitrogen and oxygen fill vacant d-orbitals in the metal atom being chelated. Valence positive charges on the metal atom can be balanced by the negative charges of combining amino acid ligands. The bonding of an electron pair into vacant orbitals of the metal allows for more covalent bonding than the valence (or oxidation number) of the metal would indicate. Forming bonds this way is called coordination chemistry. This allows chelates to form, providing that the ligands can bond with two or more moieties within the same molecule and providing that proper chemistry promoting chelation is present. An important factor is the strength of the complex formed between the metal ion and the chelating agent. This determines whether the complex will be formed in the presence of competing anions. The stability or equilibrium constant (K), expressed as log K, has been determined for many metals and chelating agents. The higher the log K values, the more tightly the metal ion will be bound to the chelating agent and the more likely that the complex will be formed.

Preferred chelating agents are ethylene diamine tetraacetic acid (EDT A), ethylene diamine dissuccinate (EDDS), N, N-bis (carboxymethyl) glutamic acid (GLDA), Diethylenetriaminepentaacetic acid (DTPA), Nitrilotriacetic acid (NTA) and Ethanoldiglycinic acid ((EDG). DTPA is particularly preferred and especially in combination with Silver. Chelating agents are usually used in the form of their salts with a metal. For example, EDTA is used in the form of disodium or tetrasodium salt. Accordingly it is preferred to use a salt form of a chelating agent over the natural acid form. Preferably the molar ratio of silver to the chelating agent is 1:0.25 to 1:10, more preferably 1: 0.5 to 1:5 and most preferably 1:1 to 1:3.

Preferably in the disclosed antimicrobial cleansing composition silver compound is present at levels not less than 0.4 ppm, still preferably not less than 0.5 ppm and further preferably not less than 1ppm and it is preferred that the silver compound in the composition is present at levels not more than 80ppm, more preferably not more than 50ppm, further preferably not more than 20 ppm and still further preferably not more than 10 ppm and most preferably not more than 5 ppm. It is highly preferred that the silver compound in the antimicrobial cleansing composition is present at 0.5 to 5 ppm.

Salt of Fatty acid:

The composition of the present invention comprises a salt of fatty acid. A salt of fatty acid is nothing but soap. It may also be called as fatty acid soap. The term "fatty acid soap" or, more simply, "soap" is used here in its popular sense, i.e., salts of aliphatic alkane- or alkene monocarboxylic fatty acids preferably having 6 to 22 carbon atoms, and more preferably 8 to 18 carbon atoms.

Usually a blend of fatty acids is used to get a blend of fatty acid soaps. The term "soap" refers to sodium, potassium, magnesium, mono-, di- and tri-ethanol ammonium cation or combinations thereof. In general, sodium soaps are preferred in the compositions of this invention, but up to 15% or even more of the soap content may be some other soap forms such as potassium, magnesium or triethanolamine soaps.

Preferably the fatty acid blend is made from fatty acids that may be different fatty acids, typically fatty acids containing fatty acid moieties with chain lengths of from C8 to C22. The fatty acid blend may also contain relatively pure amounts of one or more fatty acids. Suitable fatty acids include, but are not limited to, butyric, caproic, caprylic, capric, lauric, myristic, myristelaidic, pentadecanoic, palmitic, palmitoleic, margaric, heptadecenoic, stearic, oleic, linoleic, linolenic, arachidic, gadoleic, behenic and lignoceric acids and their isomers.

The fatty acid blend preferably includes relatively high amounts (e.g., at least 3%, preferably at least 10%) of capric and lauric acids. Further preferably the fatty acid blend includes low levels of myristic acid, (e.g. preferably less than 4% by wt.) which generally provides good lathering property.

In preferred embodiments, the fatty acid blend has proportion of capric acid to lauric acid ranging from 0.5 to 1 to 1.5 to 1.

Soaps having the fatty acid distribution of coconut oil and palm kernel oil may provide the lower end of the broad molecular weight range. Those soaps having the fatty acid distribution of peanut or rapeseed oil, or their hydrogenated derivatives, may provide the upper end of the broad molecular weight range.

It is preferred to use soaps having the fatty acid distribution of coconut oil or tallow, or mixtures thereof, since these are among the more readily available triglyceride fats. The proportion of fatty acids having at least 12 carbon atoms in coconut oil soap is about 85 %. This proportion will be greater when mixtures of coconut oil and fats such as tallow, palm oil, or non-tropical nut oils or fats are used, wherein the principle chain lengths are C16 and higher. Preferred soap for use in the compositions of this invention has at least about 85 percent fatty acids having about 12 to 18 carbon atoms. The preferred soaps for use in the present invention should include at least about 30 percent saturated soaps, i.e., soaps derived from saturated fatty acids, preferably at least about 40 percent, more preferably about 50 percent, saturated soaps by weight of the fatty acid soap. Soaps can be classified into three broad categories which differ in the chain length of the hydrocarbon chain, i.e., the chain length of the fatty acid, and whether the fatty acid is saturated or unsaturated. For purposes of the present invention these classifications are: "Laurics" soaps which encompass soaps which are derived predominantly from C12 to C14 saturated fatty acid, i.e. lauric and myristic acid, but can contain minor amounts of soaps derived from shorter chain fatty acids, e.g., C10. Laurics soaps are generally derived in practice from the hydrolysis of nut oils such as coconut oil and palm kernel oil.

"Stearics" soaps which encompass soaps which are derived predominantly from C16 to C18 saturated fatty acid, i.e. palmitic and stearic acid but can contain minor level of saturated soaps derived from longer chain fatty acids, e.g., C20. Stearic soaps are generally derived in practice from triglyceride oils such as tallow, palm oil and palm stearin.

Oleic soaps which encompass soaps derived from unsaturated fatty acids including predominantly oleic acid, linoleic acid, myristoleic acid and palmitoleic acid as well as minor amounts of longer and shorter chain unsaturated and polyunsaturated fatty acids. Oleics soaps are generally derived in practice from the hydrolysis of various triglyceride oils and fats such as tallow, palm oil, sunflower seed oil and soybean oil. Coconut oil employed for the soap may be substituted in whole or in part by other "high-laurics" or "laurics rich" oils, that is, oils or fats wherein at least 45 percent of the total fatty acids are composed of lauric acid, myristic acid and mixtures thereof. These oils are generally exemplified by the tropical nut oils of the coconut oil class. For instance, they include: palm kernel oil, babassu oil, ouricuri oil, tucum oil, cohune nut oil, murumuru oil, jaboty kernel oil, khakan kernel oil, dika nut oil, and ucuhuba butter.

Disclosed composition includes 1 to 85 wt% of a fatty acid soap. Preferably the fatty acid soap is present in an amount not more than 80wt%, more preferably not more than 75wt%, still more preferably not more than 65wt%, further preferably not more than 55wt% and still further preferably not more than 45wt% and most preferably not more than 35wt% but preferably not less than 5wt%, more preferably not less than 10wt%, still more preferably not less than 15wt% and further preferably not less than 20wt% and most preferably not less than 25wt%.

Anionic surfactant with ammonium as counter ion:

Generally when the hydrophilic part of the surfactant consists of a negatively charged group like a sulphonate, sulphate or carboxylate the surfactant is called anionic surfactant. These acts as an active surface agent to lower the surface tension of liquids. This allows them to bind to impurities and particles that are suspended in the liquid, which makes them effective cleaning agents in water. In small concentrations, they can also cause the foaming of compounds in water by creating large numbers of small bubbles of gas, and this makes them effective in cosmetics such as shampoo, toothpaste, hand wash and body wash products.

The composition of the present invention further comprises an anionic surfactant with ammonium as counter ion in addition to the fatty acid soap.

Examples of anionic surfactants with ammonium as counter ion suitable for use herein include, but are not limited to, ammonium lauryl sulfate, ammonium laureth sulfate, Ammonium dodecyl benzene sulfonate etc.

The amount of anionic surfactant used is in the range of 0.1 to 20% by weight, preferably 1 to 15 % by weight, more preferably 1 to 10% by weight and most preferably 1 to 5% by weight.

The composition of the present invention is a synergistic antimicrobial composition. The synergy effects is observed by combining 0.1 to 100 ppm by weight of at least one silver compound, 1 to 85% by weight of a salt of fatty acid, and 1 to 20 % by weight of an anionic surfactant with ammonium as counter ion. The synergistic antimicrobial composition of the present invention in the concentration range as mentioned above found to be effective against both gram-positive and gram-negative organisms.

Optional and preferred ingredients:

In addition to the ingredients described earlier, preferred embodiments of the cleansing compositions may also include other optional and preferred ingredients for their known benefits. The type and content will largely depend on the nature and type of cleansing composition as well as general principles of formulation science. Where the composition is in the form of a bar of soap or a liquid soap, it is preferred that the composition contains free fatty acids. Preferred embodiments contain 0.01 wt% to 10 wt% free fatty acid, especially when major portion of the surfactant is soap based. Potentially suitable fatty acids are C8 to C22 fatty acids. Preferred fatty acids are C12 to C18, preferably predominantly saturated, straight-chain fatty acids. However, some unsaturated fatty acids can also be employed. Of course the free fatty acids can be mixtures of shorter chain length (e.g., C10 to C14) and longer chainlength (e.g., C16-C18) chain fatty acids. For example, one useful fatty acid is fatty acid derived from high-laurics triglycerides such as coconut oil, palm kernel oil, and babasu oil. The fatty acid can be incorporated directly or they can be generated in-situ by the addition of a protic acid to the soap during processing. Examples of suitable protic acids include: mineral acids such as hydrochloric acid and sulfuric acid, adipic acid, citric acid, glycolic acid, acetic acid, formic acid, fumaric acid, lactic acid, malic acid, maleic acid, succinic acid, tartaric acid and polyacrylic acid. However, care should be taken that the residual electrolyte in the bar does not substantially reduce the effectiveness of the anticracking agent. The level of fatty acid having a chain length of 14 carbon atoms and below should generally not exceed 5.0%, preferably not exceed about 1 % and most preferably be 0.8% or less based on the total weight of the continuous phase.

Other optional compositions include one or more skin benefit agents. The term "skin benefit agent" is defined as a substance which softens or improves the elasticity, appearance, and youthfulness of the skin (stratum corneum) by either increasing its water content, adding, or replacing lipids and other skin nutrients; or both, and keeps it soft by retarding the decrease of its water content. Included among the suitable skin benefit agents are emollients, including, for example, hydrophobic emollients, hydrophilic emollients, or blends thereof. Water-soluble skin benefit agents may optionally be formulated into the liquid compositions of the invention. A variety of water-soluble skin benefit agents can be used and the level can be from 0 to 50% but preferably from 1 to 30% by weight of the composition. These materials include, but are not limited to, polyhydroxy alcohols. Preferred water soluble skin benefit agents are glycerin, sorbitol and polyethylene glycol.

Water-insoluble skin benefit agents may also be formulated into the compositions as conditioners and moisturizers. Examples include silicone oils; hydrocarbons such as liquid paraffins, petrolatum, microcrystalline wax, and mineral oil; and vegetable triglycerides such as sunflowerseed and cottonseed oils.

Water soluble/dispersible polymes is an optional ingredient that is highly preferred to be included in composition. These polymers can be cationic, anionic, amphoteric or nonionic types with molecular weights higher than 100,000 Dalton. They are known to increase the viscosity and stability of liquid cleanser compositions, to enhance in-use and after-use skin sensory feels, and to enhance lather creaminess and lather stability. Amount of the polymers, when present, may range from 0.1 to 10% by weight of the composition.

Examples of water soluble/or dispersible polymers include the carbohydrate gums such as cellulose gum, microcrystalline cellulose, cellulose gel, hydroxyethyl cellulose, hydroxypropyl cellulose, sodium carboxymethylcellulose, methyl cellulose, ethyl cellulose, guar gum, gum karaya, gum tragacanth, gum arabic, gum acacia, gum agar, xanthan gum and mixtures thereof; modified and nonmodified starch granules and pregelatinized cold water soluble starch; emulsion polymers such as Aculyn® 28, Aculyn® 22 or Carbopol® Aqua SF1; cationic polymer such as modified polysaccharides including cationic guar available from Rhone Poulenc under the trade name Jaguar@ C13S, Jaguar@ C14S, Jaguar@ C17, or Jaguar@ C16; cationic modified cellulose such as UCARE® Polymer JR 30 or JR 40 from Amerchol; N-Hance® 3000, N-Hance® 3196, N-Hance® GPX 215 or N-Hance® GPX 196 from Hercules; synthetic cationic polymer such as Merquat® 100, Merquat® 280, Merquat® 281 and Merquat® 550 sold by Nalco; cationic starches such as StaLok® 100, 200, 300 and 400 sold by Staley Inc.; cationic galactomannans such as Galactasol® 800 series by Henkel, Inc.; Quadrosoft® LM-200; and Polyquaternium-24®. Also suitable are high molecular weight polyethylene glycols such as Polyox® WSR-205 (PEG 14M), Polyox® WSR-N-60K (PEG 45), and Polyox® WSR-301 (PEG 90M).

Preservatives can also be added into the compositions to protect against the growth of potentially harmful microorganisms. Suitable traditional preservatives for compositions of this invention are alkyl esters of para-hydroxybenzoic acid. Other preservatives which have more recently come into use include hydantoin derivatives, propionate salts, and a variety of quaternary ammonium compounds. Particularly preferred preservatives are phenoxyethanol, methyl paraben, propyl paraben, imidazolidinyl urea, sodium dehydroacetate and benzyl alcohol. The preservatives should be selected having regard for the use of the composition and possible incompatibility between the preservatives and other ingredients. Preservatives are preferably employed in amounts ranging from 0.01% to 2% by weight of the composition.

A variety of other optional materials may be formulated into the compositions. These may include: antimicrobials such as 2-hydroxy-4,2',4'-trichlorodiphenylether (triclosan), 2,6-dimethyl-4-hydroxychlorobenzene, and 3,4,4'-trichlorocarbanilide; scrub and exfoliating particles such as polyethylene and silica or alumina; cooling agents such as menthol;

skin calming agents such as aloe vera; and colorants. In addition, the compositions may further include 0 to 10% by weight of opacifiers and pearlizers such as ethylene glycol distearate, titanium dioxide or Lytron® 621 (Styrene/Acrylate copolymer); all of which are useful in enhancing the appearance or properties of the product.

Soap bars in particular may contain particles that are greater than 50 μm in average diameter that help remove dry skin. Not being bound by theory, the degree of exfoliation depends on the size and morphology of the particles. Large and rough particles are usually very harsh and irritating. Very small particles may not serve as effective exfoliants. Such exfoliants used in the art include natural minerals such as silica, talc, calcite, pumice, tricalcium phosphate; seeds such as rice, apricot seeds, etc; crushed shells such as almond and walnut shells; oatmeal; polymers such as polyethylene and polypropylene beads, flower petals and leaves; microcrystalline wax beads; jojoba ester beads, and the like. These exfoliants come in a variety of particle sizes and morphology ranging from micron sized to a few mm. They also have a range of hardness. Some examples are talc, calcite, pumice, walnut shells, dolomite and polyethylene.

Advantageously, active agents other than skin conditioning agents defined above may be added to the composition. These active ingredients may be advantageously selected from bactericides, vitamins, anti-acne actives; anti-wrinkle, anti-skin atrophy and skin repair actives; skin barrier repair actives; non-steroidal cosmetic soothing actives; artificial tanning agents and accelerators; skin lightening actives; sunscreen actives; sebum stimulators; sebum inhibitors; anti-oxidants; protease inhibitors; skin tightening agents; anti-itch ingredients; hair growth inhibitors; 5-alpha reductase inhibitors; desquamating enzyme enhancers; anti-glycation agents; or mixtures thereof.

These active agents may be selected from water-soluble active agents, oil soluble active agents, pharmaceutically acceptable salts and mixtures thereof. The term "active agent" as used herein, means personal care actives which can be used to deliver a benefit to the skin and/or hair and which generally are not used to confer a skin conditioning benefit, such are delivered by emollients as defined above. The term "safe and effective amount" as used herein, means an amount of active agent high enough to modify the condition to be treated or to deliver the desired skin care benefit, but low enough to avoid serious side effects. The term "benefit," as used herein, means the therapeutic, prophylactic, and/or chronic benefits associated with treating a particular condition with one or more of the active agents described herein. What is a safe and effective amount of the active agent(s) will vary with the specific active agent, the ability of the active to penetrate through the skin, the age, health condition, and skin condition of the user, and other like factors.

A wide variety of active agent ingredients are useful for the inventive personal toilet bar compositions and include those selected from anti-acne actives, anti-wrinkle and anti-skin atrophy actives, skin barrier repair aids, cosmetic soothing aids, topical anesthetics, artificial tanning agents and accelerators, skin lightening actives, antimicrobial and antifungal actives, sunscreen actives, sebum stimulators, sebum inhibitors, anti-glycation actives and mixtures thereof.

Anti-acne actives can be effective in treating acne vulgaris, a chronic disorder of the pilosebaceous follicles. Nonlimiting examples of useful anti-acne actives include the keratolytics such as salicylic acid (o-hydroxybenzoic acid), derivatives of salicylic acid such as 5-octanoyl salicylic acid and 4 methoxysalicylic acid, and resorcinol; retinoids such as retinoic acid and its derivatives (e.g., cis and trans); sulfur-containing D and L amino acids and their derivatives and salts, particularly their N-acetyl derivatives, mixtures thereof.

Skin barrier repair actives are those skin care actives which can help repair and replenish the natural moisture barrier function of the epidermis. Non limiting examples of skin barrier repair actives include lipids such as cholesterol, ceramides, sucrose esters and pseudo-ceramides as described in European Patent Specification No. 556,957; ascorbic acid; biotin; biotin esters; phospholipids, mixtures thereof, and the like.

Artificial tanning actives can help in simulating a natural suntan by increasing melanin in the skin or by producing the appearance of increased melanin in the skin. Nonlimiting examples of artificial tanning agents and accelerators include dihydroxyacetaone; tyrosine; tyrosine esters such as ethyl tyrosinate and glucose tyrosinate; mixtures thereof.

Skin lightening actives can actually decrease the amount of melanin in the skin or provide such an effect by other mechanisms. Nonlimiting examples of skin lightening actives useful herein include aloe extract, alpha-glyceryl-L-ascorbic acid, aminotyrosine, ammonium lactate, glycolic acid, hydroquinone, 4 hydroxyanisole, mixtures thereof.

Also useful are sunscreen actives. Nonlimiting examples of sunscreens which are useful in the compositions of the present invention are those selected from the group consisting of octyl methoxyl cinnamate (Parsol MCX) and butyl methoxy benzoylmethane (Parsol 1789), 2-ethylhexyl p-methoxycinnamate, 2-ethylhexyl N,N-dimethyl-p-aminobenzoate, p-aminobenzoic acid, 2-phenylbenzimidazole-5sulfonic acid, oxybenzone, mixtures thereof.

Also useful are protease inhibitors. Protease inhibitors can be divided into two general classes: the proteinases and the peptidases. Proteinases act on specific interior peptide bonds of proteins and peptidases act on peptide bonds adjacent to a free amino or carboxyl group on the end of a protein and thus cleave the protein from the outside. The protease inhibitors suitable for use in the inventive personal toilet bar compositions include, but are not limited to, proteinases such as serine proteases, metalloproteases, cysteine proteases, and aspartyl protease, and peptidases, such as carboxypepidases, dipeptidases and aminopepidases, mixtures thereof and the like. Other useful active ingredients are skin tightening agents. Nonlimiting examples of skin tightening agents which are useful in the compositions of the present invention include monomers which can bind a polymer to the skin such as (meth) acrylic acid and a hydrophobic monomer comprised of long chain alkyl (meth) acrylates, mixtures thereof.

Active ingredients in the inventive personal toilet bar compositions may also include anti-itch ingredients. Suitable examples of anti-itch ingredients which are useful in the compositions of the present invention include hydrocortisone, methdilizine and trimeprazine, mixtures thereof.

Nonlimiting examples of hair growth inhibitors which are useful in the inventive personal toilet bar compositions include 17 beta estradiol, anti angiogenic steroids, curcuma extract, cycloxygenase inhibitors, evening primrose oil, linoleic acid and the like. Suitable 5-alpha reductase inhibitors such as ethynylestradiol and, genistine mixtures thereof.

Advantageously cationic skin feel agent(s) or polymer(s) are used from about 0.01, 0.1 or 0.2% by wt. to about 1, 1.5 or 2.0% by wt. in soap bars.

Cationic cellulose is available from Amerchol Corp. (Edison, N.J., USA) in their Polymer JR® and LR® series of polymers, as salts of hydroxyethyl cellulose reacted with trimethyl ammonium substituted epoxide, referred to in the industry (CTFA) as Polyquaternium® 10. Another type of cationic cellulose includes the polymeric quaternary ammonium salts of hydroxyethyl cellulose reacted with lauryl dimethyl ammonium-substituted epoxide, referred to in the industry (CTFA) as Polyquaternium® 24. These materials are available from Amerchol Corp. (Edison, N.J., USA) under the tradename Polymer LM-200®, and quaternary ammonium compounds such as alkyldimethylammonium halogenides.

A particularly suitable type of cationic polysaccharide polymer that can be used is a cationic guar gum derivative, such as guar hydroxypropyltrimonium chloride (Commercially available from Rhone-Poulenc in their JAGUAR@ trademark series). Examples are JAGUAR@ C13S, which has a low degree of substitution of the cationic groups and high viscosity, JAGUAR@ C15, having a moderate degree of substitution and a low viscosity, JAGUAR@ C17 (high degree of substitution, high viscosity), JAGUAR@ C16, which is a hydroxypropylated cationic guar derivative containing a low level of substituent groups as well as cationic quaternary ammonium groups, and JAGUAR@ 162 which is a high transparency, medium viscosity guar having a low degree of substitution.

Particularly preferred cationic polymers are JAGUAR@ C13S, JAGUAR® C15, JAGUAR® C17 and JAGUAR® C16 and JAGUAR® C162, especially JAGUAR® C13S. Other cationic skin feel agents known in the art may be used provided that they are compatible with the inventive formulation.

Other preferred cationic compounds that are useful in the present invention include amido quaternary ammonium compounds such as quaternary ammonium propionate and lactate salts, and quaternary ammonium hydrolyzates of silk or wheat protein, and the like. Many of these compounds can be obtained as the Mackine® Amido Functional Amines, Mackalene® Amido functional Tertiary Amine Salts, and Mackpro® cationic protein hydrolysates from the McIntyre Group Ltd. (University Park, Ill.).

In embodiments having a hydrolyzed protein conditioning agent, the average molecular weight of the hydrolyzed protein is preferably about 2500. Preferably 90% of the hydrolyzed protein is between a molecular weight of about 1500 to about 3500. In a preferred embodiment, MACKPRO® WWP (i.e. wheat germ amido dimethylamine hydrolyzed wheat protein) is added at a concentration of 0.1% (as is) in the bar.

The present invention also discloses a non-therapeutic method of cleaning or disinfecting a surface comprising the steps of applying a composition according to the invention on to said surface and at least partially removing the composition from the surface. Preferably the step of at least partially removing the composition is carried out less than 5 minutes after the step of applying the composition on the substrate.

The present invention also discloses a non-therapeutic use of a composition of the present invention as disclosed above for improved antimicrobial benefit. The preferred intended use of the composition of the present invention is non-therapeutic and cosmetic.

The inventors have determined that the composition of the invention provides an antimicrobial action where the contact time of the antimicrobial actives with the surface is low, i.e. of the order of less than 5 minutes, preferably less than 2 minutes, further more preferably less than a minute and in many cases less than 15 seconds. Now the invention will be demonstrated by the following non limiting example.

**Examples:**

The following protocol was used to evaluate biocidal activity. IN-VITRO TIME-KILL PROTOCOL - ASTM 2783 Fatty acid soap composition: A composition as shown on Table 2 was prepared. Stock of Ammonium Lauryl Sulphate (ALS): A 10% stock of ALS was prepared in sterile distilled water.

Stock of silver oxide: A stock of 10 ppm silver oxide was prepared in water and vortexed it thoroughly before adding into the fatty acid soap composition. Preparation of silver-DTPA:

1.5 g of Silver oxide powder was mixed with 22.5 g of 40% $Na_5DTPA$ in beaker (a black paste like mix is formed).The above mixture was mixed and heated at ~42°C in a water bath for 10 minutes. Any particulates observed were broken with a glass rod. The heating was then removed and 975 g of demineralized water was added to the above mix with stirring at ambient temperature (~25°C). The stirring was continued for 10 minutes. Then 0.8 g of powdered lauric acid was added and stirred further for 30 minutes. This mix was then centrifuged and filtered thru Whatman ® filter paper No-1. The supernatant was then collected as a clear pale yellow coloured solution of 1500 ppm silver-DTPA.

Stock of silver-DTPA: A stock of 10 ppm silver-DTPA was prepared in sterile distilled water. The stock was thoroughly vortexed before adding it into the fatty acid soap composition.

Table 2

| Fatty acid soap composition | Wt% |
|---|---|
| Potassium salt of fatty acid (lauric acid, myristic acid, palmitic acid) | 14.6 |
| Butylated Hydroxytoluene (BHT) | 0.05 |
| Ethylenediaminetetraacetic acid (EDTA) | 0.13 |
| Cellulose Ether (Methocel™ 40-100 from Dow Chemical) | 0.5 |
| Glycerin | 0.5 |
| Potassium Hydroxide | 3.5 |
| Ethyl glycol distearate (EGDS) | 1 |
| Potassium Chloride | 3 |
| Demineralized water and other minors | to 100 |

Preparation of comparative and preferred composition:
Different compositions were made as described below and tested against both gram-positive and gram negative bacteria. Therefore for each composition two sets were prepared for testing.

Example A and A1: 5 grams of soap composition as provided in Table 2 was diluted with 4.9 mL of sterile distilled water at room temperature.

Example B and B1: To 5 grams of soap composition provided in Table 2, 0.5 mL of 10ppm stock solution of silver - DTPA as prepared above was added and mixed thoroughly. The resultant mixture was diluted with 4.4 mL of sterile distilled water at room temperature.

Example C and C1: To 5 grams of soap composition provided in Table 2, 0.5 mL of 10ppm stock solution of silver oxide as prepared above was added and mixed thoroughly. The resultant mixture was diluted with 4.4 mL of sterile distilled water at room temperature.

Example D and D1: To 5 grams of soap composition provided in Table 2, 0.5 mL of 10ppm stock solution of silver - DTPA as prepared above was added and mixed thoroughly. Also 3 mL of 10% Sodium Laureth Sulphate (SLES) was added to this composition and then diluted with 1.5 mL of sterile distilled water and mixed it thoroughly at room temperature.

Example E and E1: To 5 grams of soap composition provided in Table 2, 0.5 mL of 10ppm stock solution of silver oxide as prepared above was added and mixed thoroughly. 3 mL of 10% SLES was added to this composition and then diluted with 1.5 mL of sterile distilled water and mixed it thoroughly at room temperature.

Example F and F1: To 5 grams of soap composition provided in Table 2, 0.5 mL of 10ppm stock solution of silver-DTPA was added and mixed thoroughly. 3 mL of 10% Sodium Dodecyl Benzene Sulphonate (SDBS) was added to this composition and then diluted with 1.5 mL of sterile distilled water and mixed it thoroughly at room temperature.

Example G and G1: To 5 grams of soap composition provided in Table 2, 0.5 mL of 10ppm stock solution of silver oxide was added and mixed thoroughly. 3 mL of 10% SDBS was added to this composition and then diluted with 1.5 mL of sterile distilled water and mixed it thoroughly at room temperature.

Example H and H1: To 5 grams of soap composition provided in Table 2, 0.5 mL of 10ppm stock solution of silver - DTPA was added and mixed thoroughly. 3 mL of 10% Sodium lauryl sulphate (SLS) was added to this composition and then diluted with 1.5 mL of sterile distilled water and mixed it thoroughly at room temperature. Example I and I1: To 5 grams of soap composition provided in Table 1, 0.5 mL of 10ppm stock solution of silver oxide was added and mixed thoroughly. 3 mL of 10% SLS was added to this composition and then diluted with 1.5 mL of sterile distilled water and mixed it thoroughly at room temperature.

Example J and J1: 3 mL of 10% Ammonium Lauryl Sulfate (ALS) was mixed with 6.9 mL of sterile distilled water at room temperature.

Example K and K1: 3 mL of 10% Ammonium Laureth Sulfate (ALES) was mixed with 6.9 mL of sterile distilled water at room temperature.

Example 1 and 5: To 5 grams of soap composition provided in Table 2, 0.5 mL of 10ppm stock solution of silver - DTPA was added and mixed thoroughly. 3 mL of 10% ALS was added to this composition and then diluted with 1.5 mL of sterile distilled water and mixed it thoroughly at room temperature.

Example 2 and 6: To 5 grams of soap composition provided in Table 2, 0.5 mL of 10ppm stock solution of silver oxide was added and mixed thoroughly. 3 mL of 10% ALS was added to this composition and then diluted with 1.5 mL of sterile distilled water and mixed it thoroughly at room temperature.

Example 3 and 7: To 5 grams of soap composition provided in Table 2, 0.5 mL of 10ppm stock solution of silver - DTPA was added and mixed thoroughly. 3 mL of 10% ALES was added to this composition and then diluted with 1.5 mL of sterile distilled water and mixed it thoroughly at room temperature.

Example 4 and 8: To 5 grams of soap composition provided in Table 2, 0.5 mL of 10ppm stock solution of silver oxide was added and mixed thoroughly. 3 mL of 10% ALES was added to this composition and then diluted with 1.5 mL of sterile distilled water and mixed it thoroughly at room temperature.

Preparation of the bacterial culture

For one set of experiment Escherichia.coli ATCC 10536 was used in the study to represent gram negative bacteria and for other set of experiments Staphylococcus aureus ATCC 6538 was used to represent gram positive bacteria. The bacteria were grown overnight on Tryptic soya agar (TSA) plate. The bacterial cell density was then adjusted at 620 nm to a pre-calibrated optical density to get the final count of 109 cfu/mL in saline (0.86% NaCl) by using a spectrophotometer.

Assay Protocol

9.9 mL of the composition of Example A (base composition) was taken in a sample container to which 0.1 mL of bacterial culture was added just before performing the assay and mixed well to obtain a mixture. A timer was started immediately after the addition of the culture. The mixture was kept for a specific contact of 10 seconds.

At the end of the contact time the antibacterial activity of the Example A (base composition) was neutralized immediately, by addition of 1 mL of the above mixture to 9 mL of an appropriate neutralizing broth which is validated for the test system. The neutralized samples were then serially diluted upto 5 dilution in neutralizer broth and plated on TSA (40gpL - Difco) in duplicates.

The log reduction was calculated by comparing with the bacterial control. The bacterial control used for this purpose was a mixture prepared by addition of 0.1 mL of bacterial culture to 9.9 mL of saline; the mixture was then serially diluted and plated on TSA. After solidification of the TSA plates, the plates were incubated at 37°C for 48 hours. The colonies on the plates were counted.

The results against E.coli (gram-negative) is summarized below in Table 3:

Table 3

| Biocidal activity Log$_{10}$ Reduction against E. coli ATCC 10536 | | |
|---|---|---|
| Example | Composition | Log reduction |
| A | Fatty acid soap | 2.9 $\pm$ 0.12 |
| B | Fatty acid soap + 1 ppm silver-DTPA | 3.5 $\pm$ 0.31 |
| C | Fatty acid soap + 1 ppm silver oxide | 3.2 $\pm$ 0.21 |
| D | Fatty acid soap + 1ppm silver-DTPA + 3% SLES | 3.6 $\pm$ 0.34 |
| E | Fatty acid soap + 1 ppm silver oxide + 3% SLES | 3.1 $\pm$ 0.22 |
| F | Fatty acid soap + 1 ppm silver-DTPA + 3% SDBS | 3.6 $\pm$ 0.29 |
| G | Fatty acid soap + 1 ppm silver oxide + 3% SDBS | 3.0 $\pm$ 0.22 |
| H | Fatty acid soap + 1 ppm silver-DTPA + 3% SLS | 3.5 $\pm$ 0.25 |
| I | Fatty acid soap + 1 ppm silver oxide + 3% SLS | 3.1 $\pm$ 0.12 |
| J | 5% ALS | 0.6 $\pm$ 0.15 |
| K | 5% ALES | 0.4 $\pm$ 0.23 |
| 1 | Fatty acid soap + 1 ppm silver-DTPA + 3% ALS | >5 |
| 2 | Fatty acid soap + 1 ppm silver oxide + 3% ALS | >5 |
| 3 | Fatty acid soap + 1 ppm silver-DTPA + 3% ALES | >5 |

(continued)

| Biocidal activity Log$_{10}$ Reduction against E. coli ATCC 10536 | | |
|---|---|---|
| Example | Composition | Log reduction |
| 4 | Fatty acid soap + 1 ppm silver oxide + 3% ALES | >5 |

From Table 2 it is evident that the compositions that are within the scope of the present invention provides significantly better log reduction value when compared with the respective control examples. It is clear from Table 2 that Example 1, 2, 3 and 4 had greater bactericidal efficacy against E. coli ATCC 10536 than the comparative example (Example A to K).

The results against S. aureus (gram-positive) is summarized below in Table 4:

Table 4

| Biocidal activity | | |
|---|---|---|
| Log10 Reduction against S. aureus ATCC 6538 | | |
| Example | Composition | Log reduction |
| A1 | Fatty acid soap | 0.4 $\pm$ 0.11 |
| B1 | Fatty acid soap + 1 ppm silver-DTPA | 1.2 $\pm$ 0.13 |
| C1 | Fatty acid soap + 1 ppm silver oxide | 0.7 $\pm$ 0.21 |
| D1 | Fatty acid soap + 1 ppm silver-DTPA + 3% SLES | 1.1 $\pm$ 0.21 |
| E1 | Fatty acid soap + 1 ppm silver oxide + 3% SLES | 0.9 $\pm$ 0.12 |
| F1 | Fatty acid soap + 1 ppm silver-DTPA + 3% SDBS | 1.5 $\pm$ 0.15 |
| G1 | Fatty acid soap + 1 ppm silver oxide + 3% SDBS | 1.1 $\pm$ 0.14 |
| H1 | Fatty acid soap + 1 ppm silver-DTPA + 3% SLS | 2.2 $\pm$ 0.20 |
| I1 | Fatty acid soap + 1 ppm silver oxide + 3% SLS | 1.6 $\pm$ 0.23 |
| J1 | 5% ALS | 1.0 $\pm$ 0.31 |
| K1 | 5% ALES | 0.8 $\pm$ 0.26 |
| 5 | Fatty acid soap + 1 ppm silver-DTPA + 3% ALS (Ammonium Lauryl Sulfate) | 3.7 $\pm$ 0.24 |
| 6 | Fatty acid soap + 1ppm silver oxide + 3% ALS (Ammonium Lauryl Sulfate) | 2.8 $\pm$ 0.31 |
| 7 | Fatty acid soap + 1 ppm silver-DTPA + 3% ALES (Ammonium Laureth Sulfate) | 3.4 $\pm$ 0.12 |
| 8 | Fatty acid soap + 1 ppm silver oxide + 3% ALES (Ammonium Laureth Sulfate) | 2.6 $\pm$ 0.22 |

From Table 3 it is evident that the compositions that are within the scope of the present invention provides significantly better log reduction value when compared with the respective control examples. It is clear from Table 2 that Example 5, 6, 7 and 8 had greater bactericidal efficacy against *S.aureus* ATCC 6538 than the comparative example (Example A1 to K1).

It was also observed that as the silver level is quite low in the compositions of the present invention, the compositions did not undergo any discoloration and aesthetically pleasant.

**Claims**

1. An antimicrobial composition comprising:

   a) 0.1 to 100 ppm by weight of at least one silver compound; and,
   b) a combination of anionic surfactants comprising 1 to 85% by weight of a salt of fatty acid and 0.1 to 20% by weight of an anionic surfactant with ammonium as counter ion wherein the hydrophilic part of the surfactant consists of a negatively charged sulphonate or sulphate group;

and wherein the percentage by weight is with regard to the weight of the antimicrobial composition.

2. A composition as claimed in claim 1 wherein the amount of silver compound in the range of 0.5 to 10 ppm by weight, based on the total weight of the composition.

3. A composition as claimed in any one of the preceding claims wherein the silver compound is selected from group consisting of silver oxide, silver nitrate, silver acetate, silver sulfate, silver benzoate, silver salicylate, silver carbonate, silver citrate, silver phosphate and a complex of silver or mixtures thereof.

4. A composition as claimed in claim 3 wherein the complex of silver is formed by reacting silver with one or more of a chelating agent.

5. A composition as claimed in claim 4 wherein said chelating agent is selected from ethylene diamine tetraacetic acid (EDTA), ethylene diamine dissuccinate (EDDS), N,N-bis(carboxymethyl) glutamic acid (GLDA), Diethylenetriaminepentaacetic acid (DTPA), Nitrilotriacetic acid (NTA) or Ethanoldiglycinic acid (EDG), and wherein preferably said chelating agent is Diethylenetriaminepentaacetic acid (DTPA).

6. A composition as claimed in any one of the preceding claims 4 or 5 wherein molar ratio of said silver to said chelating agent is 1:0.25 to 1:10.

7. A composition as claimed in any one of the preceding claims wherein the anionic surfactant is ammonium lauryl sulfate, ammonium laureth sulfate, Ammonium dodecyl benzene sulfonate, or a combination thereof.

8. A composition as claimed in any one of the preceding claims is in the form of a bar, liquid or gel.

9. A non-therapeutic method of cleaning or disinfecting a surface comprising the steps of applying a composition as claimed in any one of the preceding claims on to said surface and at least partially removing the composition from the surface.

10. A non-therapeutic method as claimed in claim 9 wherein the step of at least partially removing the composition is carried out less than 5 minutes after the step of applying the composition on the substrate.

11. Non-therapeutic use of a composition as claimed in any one of the preceding claims 1 to 8 for antimicrobial benefit.

12. Use of an anionic surfactant with ammonium as counter ion wherein the hydrophilic part of the surfactant consists of a negatively charged sulphonate or sulphate group, in an antimicrobial composition comprising 0.1 to 100 ppm by weight of at least one silver compound, a salt of fatty acid; and an anionic surfactant with ammonium as counter ion to increase the antimicrobial efficacy of the composition.


**Patentansprüche**

1. Antimikrobielle Zusammensetzung, umfassend:

   a) 0,1 bis 100 Gewichts-ppm mindestens einer Silberverbindung; und
   b) eine Kombination von anionischen Tensiden, umfassend 1 bis 85 Gewichts-% eines Salzes von Fettsäure und 0,1 bis 20 Gewichts-% eines anionischen Tensids mit Ammonium als Gegenion, wobei der hydrophile Teil des Tensids aus einer negativ geladenen Sulfonat- oder Sulfatgruppe besteht;

   und wobei der Gewichtsprozentsatz sich auf das Gewicht der antimikrobiellen Zusammensetzung bezieht.

2. Zusammensetzung wie in Anspruch 1 beansprucht, wobei die Menge der Silberverbindung im Bereich von 0,5 bis 10 Gewichts-ppm, bezogen auf das Gesamtgewicht der Zusammensetzung, liegt.

3. Zusammensetzung wie in irgendeinem der vorhergehenden Ansprüche beansprucht, wobei die Silberverbindung ausgewählt ist aus der Gruppe bestehend aus Silberoxid, Silbernitrat, Silberacetat, Silbersulfat, Silberbenzoat, Silbersalicylat, Silbercarbonat, Silbercitrat, Silberphosphat und einem Komplex von Silber oder Mischungen davon.

4. Zusammensetzung wie in Anspruch 3 beansprucht, wobei der Silberkomplex durch Umsetzen von Silber mit einem oder mehreren Chelatbildnern gebildet wird.

5. Zusammensetzung wie in Anspruch 4 beansprucht, wobei der Chelatbildner ausgewählt ist aus Ethylendiamintetraessigsäure (EDTA), Ethylendiamindisuccinat (EDDS), N,N-Bis(carboxymethyl)glutaminsäure (GLDA), Diethylentriaminpentaessigsäure (DTPA), Nitrilotriessigsäure (NTA) oder Ethanoldiglycinsäure (EDG), und wobei der Chelatbildner bevorzugt Diethylentriaminpentaessigsäure (DTPA) ist.

6. Zusammensetzung wie in irgendeinem der vorhergehenden Ansprüche 4 oder 5 beansprucht, wobei das Molverhältnis des Silbers zu dem Chelatbildner 1:0,25 bis 1:10 beträgt.

7. Zusammensetzung wie in irgendeinem der vorhergehenden Ansprüche beansprucht, wobei das anionische Tensid Ammoniumlaurylsulfat, Ammoniumlaurethsulfat, Ammoniumdodecylbenzolsulfonat oder eine Kombination davon ist.

8. Zusammensetzung wie in irgendeinem der vorhergehenden Ansprüche beansprucht, die in Form eines Riegels, einer Flüssigkeit oder eines Gels vorliegt.

9. Nichttherapeutisches Verfahren zum Reinigen oder Desinfizieren einer Oberfläche, umfassend die Schritte des Aufbringens einer Zusammensetzung, wie in irgendeinem der vorhergehenden Ansprüche beansprucht, auf die Oberfläche und zumindest teilweises Entfernen der Zusammensetzung von der Oberfläche.

10. Nichttherapeutisches Verfahren wie in Anspruch 9 beansprucht, wobei der Schritt des zumindest teilweisen Entfernens der Zusammensetzung weniger als 5 Minuten nach dem Schritt des Aufbringens der Zusammensetzung auf das Substrat durchgeführt wird.

11. Nichttherapeutische Verwendung einer Zusammensetzung, wie in irgendeinem der vorhergehenden Ansprüche 1 bis 8 beansprucht, für den antimikrobiellen Nutzen.

12. Verwendung eines anionischen Tensids mit Ammonium als Gegenion, wobei der hydrophile Teil des Tensids aus einer negativ geladenen Sulfonat- oder Sulfatgruppe besteht, in einer antimikrobiellen Zusammensetzung, umfassend 0,1 bis 100 Gewichts-ppm mindestens einer Silberverbindung, ein Salz von Fettsäure; und ein anionisches Tensid mit Ammonium als Gegenion, um die antimikrobielle Wirksamkeit der Zusammensetzung zu erhöhen.

## Revendications

1. Composition antimicrobienne comprenant :

a) 0,1 à 100 ppm en masse d'au moins un composé d'argent ; et,
b) une combinaison de tensioactifs anioniques comprenant de 1 à 85 % en masse d'un sel d'acide gras et de 0,1 à 20 % en masse de tensioactif anionique avec de l'ammonium comme contre-ion où la part hydrophile du tensioactif consiste en un groupe sulfate ou sulfonate négativement chargé ;

et où le pourcentage en masse concerne la masse de la composition antimicrobienne.

2. Composition selon la revendication 1, où la quantité de composé d'argent se trouve dans l'intervalle de 0,5 à 10 ppm en masse, rapportée à la masse totale de la composition.

3. Composition selon l'une quelconque des revendications précédentes, où le composé d'argent est choisi dans le groupe consistant en oxyde d'argent, nitrate d'argent, acétate d'argent, sulfate d'argent, benzoate d'argent, salicylate d'argent, carbonate d'argent, citrate d'argent, phosphate d'argent et un complexe d'argent ou des mélanges de ceux-ci.

4. Composition selon la revendication 3, où le complexe d'argent est formé par réaction d'argent avec un ou plusieurs d'un agent chélatant.

**5.** Composition selon la revendication 4, où ledit agent chélatant est choisi parmi l'acide éthylène diaminetétraacétique (EDTA), le disuccinate d'éthylènediamine (EDDS), l'acide N,N-bis(carboxyméthyl)-glutamique (GLDA), l'acide diéthylènetriaminepentaacétique (DTPA), l'acide nitrilotriacétique (NTA) ou l'acide éthanoldiglycinique (EDG), et où ledit agent chélatant est de préférence l'acide diéthylènetriaminepentaacétique (DTPA).

**6.** Composition selon l'une quelconque des revendications 4 ou 5 précédentes, où le rapport molaire dudit argent audit agent chélatant est de 1:0,25 à 1:10.

**7.** Composition selon l'une quelconque des revendications précédentes, où le tensioactif anionique est le laurylsulfate d'ammonium, laureth sulfate d'ammonium, dodécylbenzènesulfonate d'ammonium, ou une combinaison de ceux-ci.

**8.** Composition selon l'une quelconque des revendications précédentes qui est dans la forme d'une barre, d'un liquide ou d'un gel.

**9.** Procédé non-thérapeutique de nettoyage ou désinfection d'une surface comprenant les étapes d'application d'une composition selon l'une quelconque des revendications précédentes sur ladite surface et d'élimination au moins partielle de la composition de la surface.

**10.** Procédé non-thérapeutique selon la revendication 9, où l'étape d'élimination au moins partielle de la composition est réalisée en moins de 5 minutes après l'étape d'application de la composition sur le substrat.

**11.** Utilisation non-thérapeutique d'une composition selon l'une quelconque des revendications 1 à 8 précédentes pour un bénéfice antimicrobien.

**12.** Utilisation d'un tensioactif anionique avec de l'ammonium comme contre-ion où la part hydrophile du tensioactif consiste en un groupe sulfate ou sulfonate négativement chargé, dans une composition antimicrobienne comprenant 0,1 à 100 ppm en masse d'au moins un composé d'argent, un sel d'acide gras; et un tensioactif anionique avec de l'ammonium comme contre-ion pour augmenter l'efficacité antimicrobienne de la composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008014247 A, Lu
- US 6051614 A
- US 3050467 B1, Horowitz
- US 2011224120 AA, Henkel
- WO 2014170186 A1
- EP 556957 A